Europäisches Patentamt

European Patent Office

Office européen des brevets

(19)

(11) Numéro de publication : **0 226 520**
**B1**

(12)

# FASCICULE DE BREVET EUROPÉEN

(45) Date de publication du fascicule du brevet :
**14.02.90**

(21) Numéro de dépôt : **86420286.6**

(22) Date de dépôt : **24.11.86**

(51) Int. Cl.⁵ : **H 02 J  3/14,** H 02 J  3/26,
F 24 D  19/10

(54) **Procédé et dispositif de commande de l'alimentation de charges à partir d'un réseau triphasé.**

(30) Priorité : **26.11.85 FR 8517629**

(43) Date de publication de la demande :
**24.06.87 Bulletin 87/26**

(45) Mention de la délivrance du brevet :
**14.02.90 Bulletin 90/07**

(84) Etats contractants désignés :
**AT BE CH DE ES GB IT LI NL SE**

(56) Documents cités :
**WO--A--86 /006 89**
**FR--A-- 2 081 906**
**FR--A-- 2 182 900**
**GB--A-- 2 114 829**

(73) Titulaire : **EUROTHERM AUTOMATION S.A., Société Anonyme:**
**Parc d'Affaires de Dardilly 6, chemin des Joncs B.P. 55**
**F-69572 Dardilly Cedex (FR)**

(72) Inventeur : **Level, Yves**
**475, route des Condamines**
**F-69390 Vernaison (FR)**
Inventeur : **Picavet, Michel Alexandre**
**Hameau de Mosouvre Lentilly**
**F-69210 L'Arbresle (FR)**

(74) Mandataire : **Ropital-Bonvarlet, Claude et al**
**Cabinet BEAU DE LOMENIE 99, Grande rue de la Guillotière**
**F-69007 Lyon (FR)**

EP 0 226 520 B1

**Description**

La présente invention a pour objet un procédé et un dispositif de commande de l'alimentation de charges à partir d'un réseau triphasé, ces charges pouvant être en particulier résistives et constituées par exemple par des résistances de chauffage ou par des électrolytes.

On connaît déjà divers dispositifs d'alimentation d'une charge comprenant une boucle de régulation dans laquelle un interrupteur à thyristor, dénommé gradateur de puissance, est monté en série dans la ligne d'alimentation de la charge pour autoriser l'alimentation de la charge de façon sélective.

Dans le cas où les charges sont constituées par des résistances de chauffage, celles-ci présentent, généralement, une faible inertie thermique. Afin d'éviter des variations importantes de la température et du rayonnement infrarouge émis par une résistance, celle-ci est alors alimentée par une série de trains d'onde de courte durée.

Dans le cas d'un dispositif d'alimentation de charges selon un montage triphasé, un interrupteur électronique, constitué par un couple de thyristors montés tête-bêche, est placé sur chaque ligne d'alimentation de charges correspondant à une phase du réseau d'alimentation.

Le déclenchement de la fermeture des interrupteurs électriques permettant d'initialiser l'alimentation des charges par des trains d'ondes de courte durée peut être effectué lors du passage à zéro de la tension entre deux phases de la source d'alimentation triphasée. Les deux autres tensions entre phases présentent, cependant, à cet instant, une valeur non nulle. L'initialisation de la conduction des interrupteurs électroniques, à des instants où la tension est non nulle, se traduit par un front raide qui provoque l'apparition de parasites sur le réseau d'alimentation triphasé sur lequel est connecté le dispositif d'alimentation des charges.

Afin de remédier à cet inconvénient, on a proposé de réaliser un montage triphasé d'alimentation de charges comportant deux couples de thyristors montés tête-bêche et contrôlant deux phases différentes de la tension d'alimentation triphasée. Dans ce cas les deux couples de thyristors montés tête-bêche constituent des interrupteurs montés en lige et formant un ensemble maître-esclave. Le premier couple assure un déclenchement lors d'un passage à zéro de la tension entre la phase sur laquelle est monté cet interrupteur électronique et une autre phase ne comportant pas d'interrupteur électronique, et le second interrupteur assure le déclenchement sur la dernière phase avec un retard d'une demi-alternance si les charges sont toutes identiques, c'est-à-dire lors du passage à zéro de la tension aux bornes du couple de thyristors constituant le second interrupteur (FR-A-2 081 906).

Un tel dispositif permet, certes, de réduire les parasites sur le réseau, mais introduit une composante continue dans l'alimentation des charges par suite de la dissymétrie du courant des différentes phases. Il s'ensuit des conséquences dommageables pour les transformateurs présents dans le montage. Par ailleurs, ce montage introduit, également, un déséquilibre de la puissance consommée dans les charges alimentées par les différentes phases.

La présente invention vise à remédier aux inconvénients précités et à permettre l'alimentation de charges à l'aide de trains d'onde de faible durée dans un montage triphase sans qu'apparaisse une composante continue ni un déséquilibre de la puissance dans les charges.

Ces buts sont atteints grâce à un procédé de commande de l'alimentation de charges à partir d'une source d'alimentation triphasée, selon lequel à chaque déclenchement de l'alimentation des charges on n'autorise le passage de courant dans chaque charge que pendant une durée correspondant à un certain nombre de périodes du courant alternatif d'alimentation définissant un train d'onde et à chaque déclenchement de l'alimentation des charges on autorise d'abord, de façon synchronisée lors du passage à zéro de la tension entre deux phases le passage de courant dans deux lignes d'alimentation des charges correspondant à deux phases différentes du courant triphasé d'alimentation puis, avec un retard prédéterminé, le passage de courant dans la troisième ligne d'alimentation des charges correspondant à la troisième phase, caractérisé en ce que pour chaque déclenchement de l'alimentation des charges on sélectionne une tension déterminée entre deux phases et un sens d'évolution déterminé, croissant ou décroissant, de cette tension pour autoriser, tout d'abord, un passage de courant dans deux lignes déterminées d'alimentation des charges lors du passage par zéro de ladite tension déterminée dans ledit sens d'évolution déterminé, et en ce que pour une série de six déclenchements successifs de l'alimentation des charges, on réalise des permutations parmi les phases considérées et les sens d'évolution considérés pour définir ladite tension déterminée et le sens d'évolution pris en compte pour cette tension, afin de provoquer chaque déclenchement lors d'un passage à zéro correspondant à une combinaison différente d'une tension déterminée entre phases et d'un sens d'évolution de cette tension de sorte que pour les courants parcourant chaque ligne d'alimentation des charges sur un cycle de six déclenchements conduisant à la formation de six trains d'onde, la composante continue est annulée.

Lors de déclenchements « syncopés » de l'alimentation des charges, on interrompt l'alimentation de charges au premier passage à zéro après deux alternances pleines de conduction.

On notera que le procédé selon l'invention s'applique à des trains d'onde de longueurs diverses mais s'avère particulièrement efficace pour le cas de déclenchement syncopés c'est-à-dire mettant en œuvre un train d'onde réduit à une seule période car c'est le mode de déclenchement qui introduit le plus de déséquilibre dans les montages traditionnels.

Chaque déclenchement de l'alimentation des charges est réalisé lors d'un passage à zéro de la tension déterminée dont la valeur s'est annulée immédiatement après le passage à zéro de la tension déterminée ayant provoqué le déclenchement précédent de l'alimentation des charges.

L'invention a également pour objet un dispositif de commande de l'alimentation de charges à partir d'une source d'alimentation triphasée, comprenant un interrupteur à thyristors placé sur chaque ligne d'alimentation d'une charge correspondant à une phase et un circuit de commande des interrupteurs à thyristors pour former d'abord, de façon synchronisée par rapport au passage par zéro d'une tension composée entre deux phases les deux interrupteurs places sur les lignes correspondant à ces deux phases, puis fermer le troisième interrupteur lors de l'annulation de la tension aux bornes de ce troisième interrupteur, et maintenir les interrupteurs fermés perdant une durée prédéterminée correspondant à un nombre prédéterminé de périodes du courant alternatif d'alimentation, et caractérisé en ce qu'il comprend un microprocesseur, des circuits de détection du passage à zéro de la tension composée de chaque phase par rapport à une autre phase et de détection du signe de chaque tension composée et des circuits indépendants de commande des gâchettes des thyristors des interrupteurs à thyristors placés sur les lignes d'alimentation des charges, et en ce que les circuits de détection du passage à zéro de la tension composée de chaque phase sont reliés au microprocesseur pour engendrer des interruptions et déclencher la commande des circuits indépendants de commande des gâchettes des thyristors des interrupteurs à thyristors selon un ordre prédéterminé.

Les circuits de détection du passage à zéro de la tension d'alimentation de chaque phase et de détection du signe de la tension d'alimentation de chaque phase comprennent, pour chaque phase, un transformateur et des circuits de mise en forme.

De façon plus particulière, les circuits indépendant de commande de gâchettes des thyristors des interrupteurs à thyristors comprennent, pour chacune des trois phases, un circuit oscillateur constitué par un circuit astable dont le démarrage est synchronisé sur la commande de gâchette correspondante du microprocesseur un circuit d'interface et un transformateur d'impulsions assurant l'isolement, l'amplification et l'adaptation d'impédance des impulsions envoyées.

Les circuits indépendants de commande de gâchettes des thyristors peuvent, en outre, comprendre un circuit d'inhibition de déclenchement.

Par ailleurs, le dispositif peut, en outre, comprendre un circuit dit « chien de garde » associé au microprocesseur qui comprend au moins deux circuits monostables destinés à être réarmés indépendamment en des points différents du programme.

D'autres caractéristiques et avantages de l'invention ressortiront de la description suivante de modes particuliers de réalisation, donnés à titre d'exemple non limitatif, en référence au dessin annexé sur lequel :

la figure 1 est un schéma-bloc simplifié montrant les différents modules d'un dispositif de commande de l'alimentation de charges conforme à l'invention,

la figure 2 est un schéma d'un exemple de réalisation d'un circuit de déclenchement et de puissance pouvant être associé à une phase d'un montage triphasé selon l'invention,

la figure 3 est un schéma d'un circuit de commande pouvant être combiné au circuit de la figure 2 pour un montage triphasé d'alimentation de charges,

la figure 4 représente le schéma d'un circuit dit « chien de garde » pouvant être utilisé dans le dispositif de la figure 1,

la figure 5 représente le schéma de circuits de détection de passage à zéro de la tension d'alimentation de chaque phase et de détection du signe de cette tension, dans un dispositif selon l'invention,

la figure 6 montre une série de chronogrammes représentant la forme des signaux en différents points du circuit de la figure 5,

les figures 7 et 8 représentent deux formes de trains d'ondes émis à des instants différents lors de l'alimentation de charges avec le dispositif selon l'invention,

la figure 9 représente les tensions triphasées et un cycle complet de trains d'ondes différents d'alimentation de charges avec le dispositif selon l'invention visant à éliminer les composantes continues et les dissymétries dans les charges,

la figure 10 est un schéma symbolique montrant l'application des tensions et courants de la figure 9 à l'alimentation de résistances à partir d'une alimentation triphasée avec un montage en étoile,

la figure 11 est un organigramme simplifié montrant le fonctionnement du microprocesseur du dispositif selon l'invention, et

la figure 12 représente un schéma analogue à celui de la figure 10, mais correspondant à des charges montées en triangle.

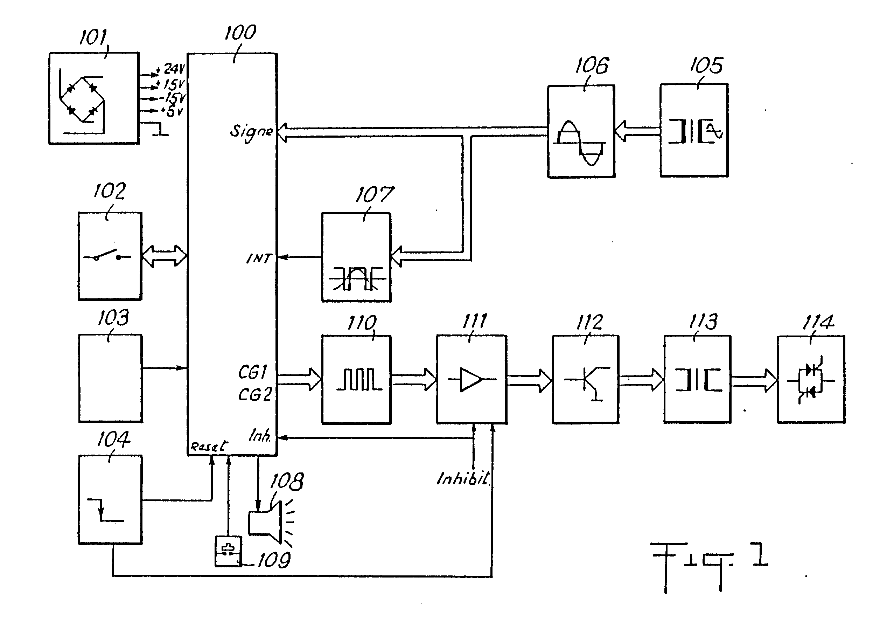

On voit sur la figure 1, le schéma simplifié d'un dispositif de commande permettant de réguler l'alimentation de charges par exemple des charges résistives à partir d'un réseau triphasé, tout en évitant l'apparition de parasites sur le réseau à chaque déclenchement des thyristors qui constituent des interrupteurs électroniques montés en ligne sur les différentes phases du réseau, et en garantissant qu'aucune composante continue ou dissymétrie n'est introduite dans le courant d'alimentation de chaque résistance.

Sur la figure 1, on a représenté un microprocesseur 100 qui coopère avec un circuit d'alimentation

3

EP 0 226 520 B1

continue stabilisée 101 et peut être configuré d'une manière prédéterminée à l'aide de contacts 102. Un circuit 103 permet, en outre, de choisir le type de commande souhaité, dans le cas où le microprocesseur 100 est adapté à des types de fonctionnement variés.

Le microprocesseur 100 présente des sorties pour la commande des gâchettes des thyristors qui constituent un interrupteur électronique 114 monté sur une ligne d'alimentation correspondant à une phase d'un réseau triphasé d'alimentation. Sur la figure 1 on n'a représenté que les sorties de commande de gâchettes correspondant à un seul interrupteur électronique, mais ces sorties de commande de gâchette sont en fait reliées par trois chaînes de traitement similaires à trois interrupteurs électroniques tels que l'interrupteur 114, associés aux trois lignes d'alimentation des résistances ou groupes de résistances alimentés par les trois phases du réseau triphasé, de façon à réaliser un contrôle indépendant des six gâchettes de thyristors.

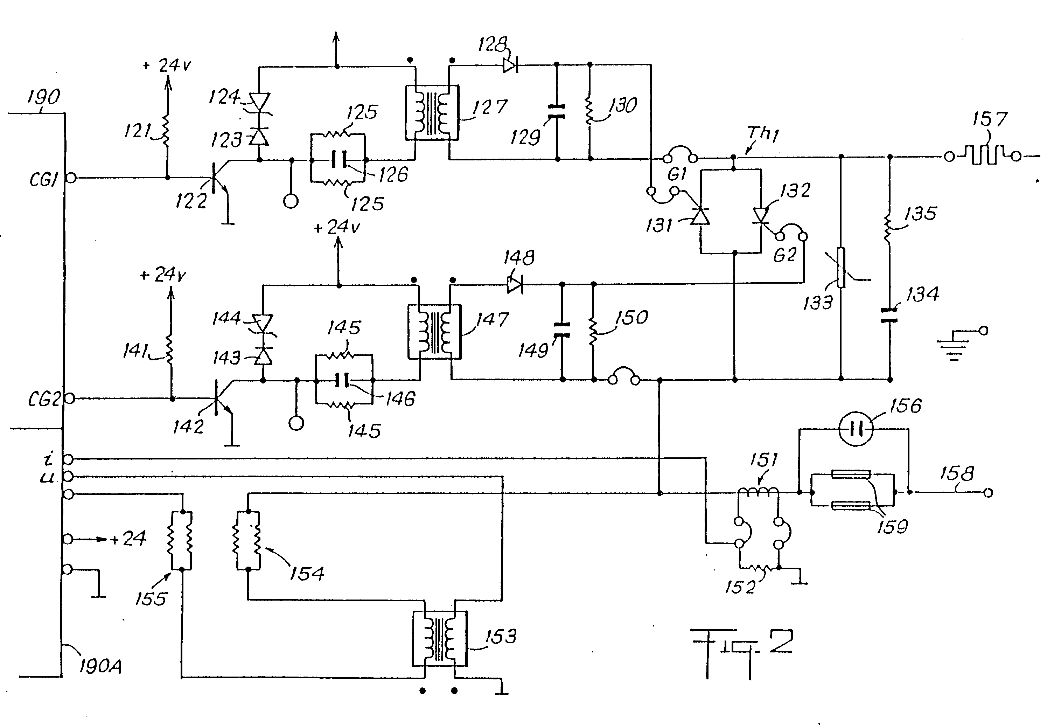

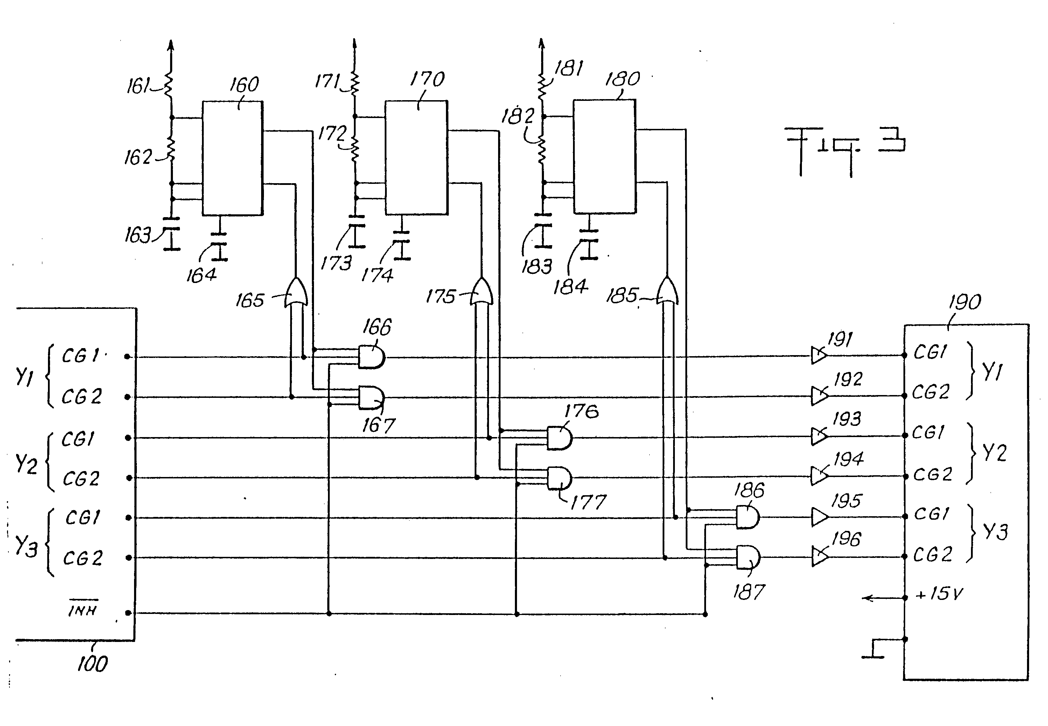

Chaque chaîne de traitement reliant des sorties de commande de gâchette du microprocesseur 100 à des interrupteurs électroniques 114 composés de deux thyristors montés tête-bêche en anti-parallèle comprend un circuit oscillateur 110, un circuit d'inhibition 111, un circuit d'interface 112 et un transformateur d'impulsions 113. Ces différents circuits seront décrits plus loin, de façon plus détaillée, en référence aux figures 2 et 3.

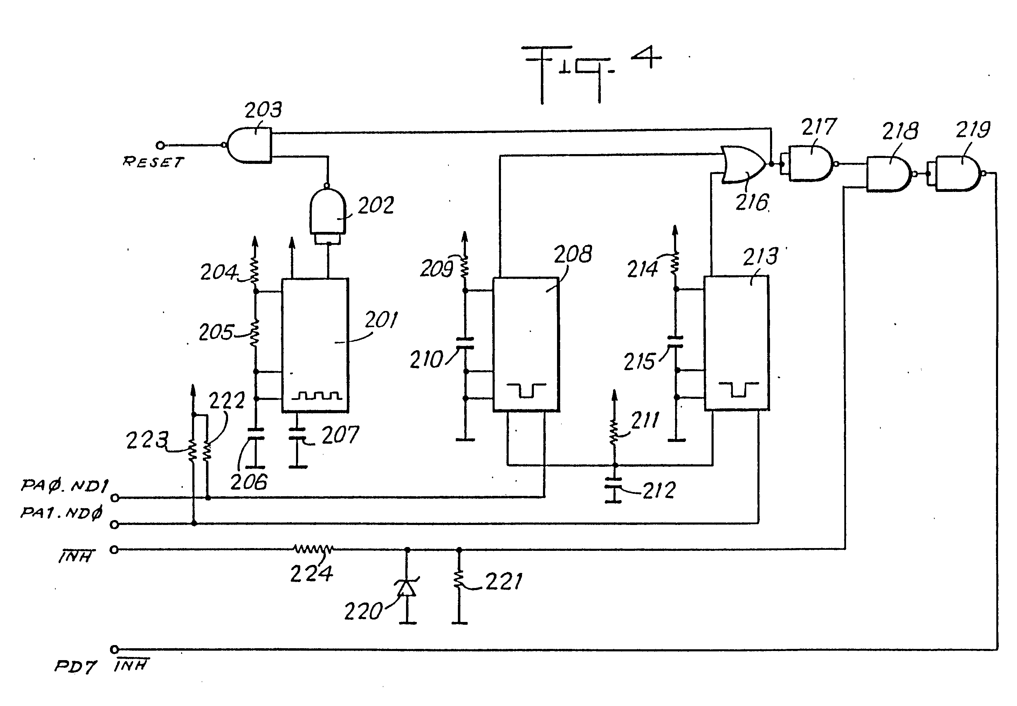

Un circuit de contrôle 104, dit chien de garde, qui sera décrit de façon plus détaillée en référence à la figure 4, assure la surveillance de l'activité correcte du microprocesseur et provoque une réinitialisation du microprocesseur en cas de défaut.

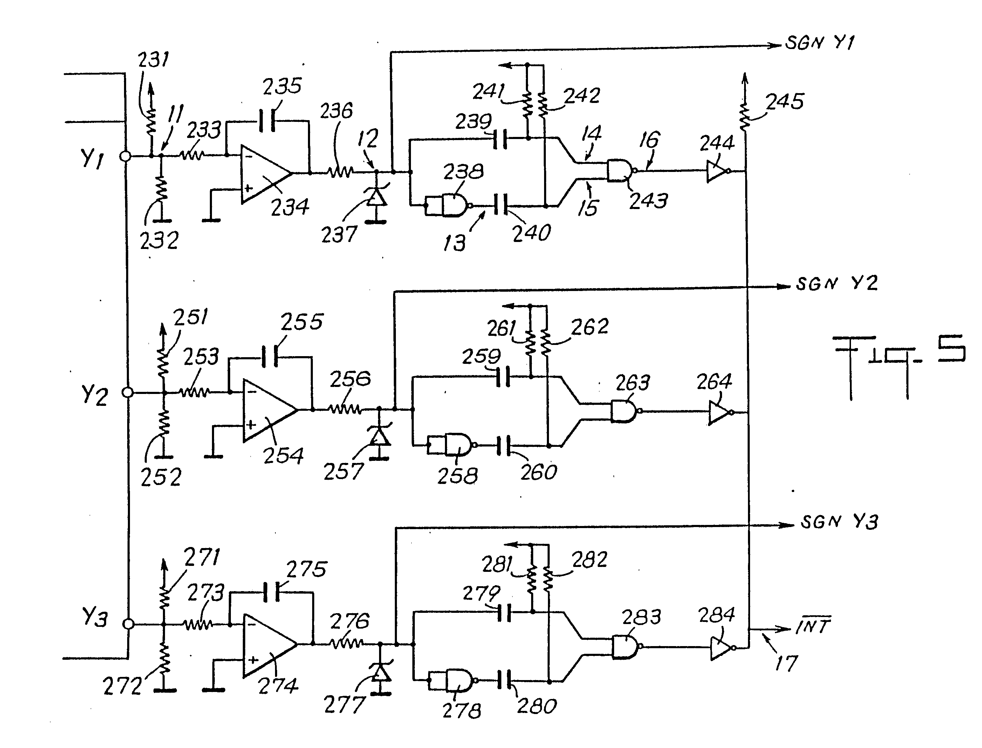

Un aspect important du dispositif de la figure 1 réside dans la présence d'un transformateur d'isolement 105 associé à chaque ligne d'alimentation des charges correspondant à une phase et permettant, par l'intermédiaire d'un circuit de mise en forme 106 et d'un circuit de synchronisation 107, de fournir au microprocesseur 100, d'une part, une information concernant le signe de la tension de la phase considérée par rapport à une autre phase déterminée et, d'autre part, une information d'interruption synchronisée avec les passages par zéro de ladite tension. Des circuits 105, 106 107 sont prévus pour chacune des trois phases et seront décrits de façon plus détaillée en référence à la figure 5.

Un dispositif d'alarme 108 peut être relié à une sortie correspondante du microprocesseur 100 pour signaler la disparition d'une ou plusieurs phases du secteur ou l'apparition d'un défaut de fonctionnement dans la synchronisation du bloc. Dans ce cas, tous les déclenchements de thyristors sont inhibés. Un bouton poussoir 109 d'acquittement d'alarme est lui-même relié à une entrée d'acquittement du microprocesseur 100.

Le microprocesseur 100 peut être constitué par exemple, par un microprocesseur présentant une bonne immunité au bruit tel que le microprocesseur 6 805 R3 commercialisé par la Société Motorola.

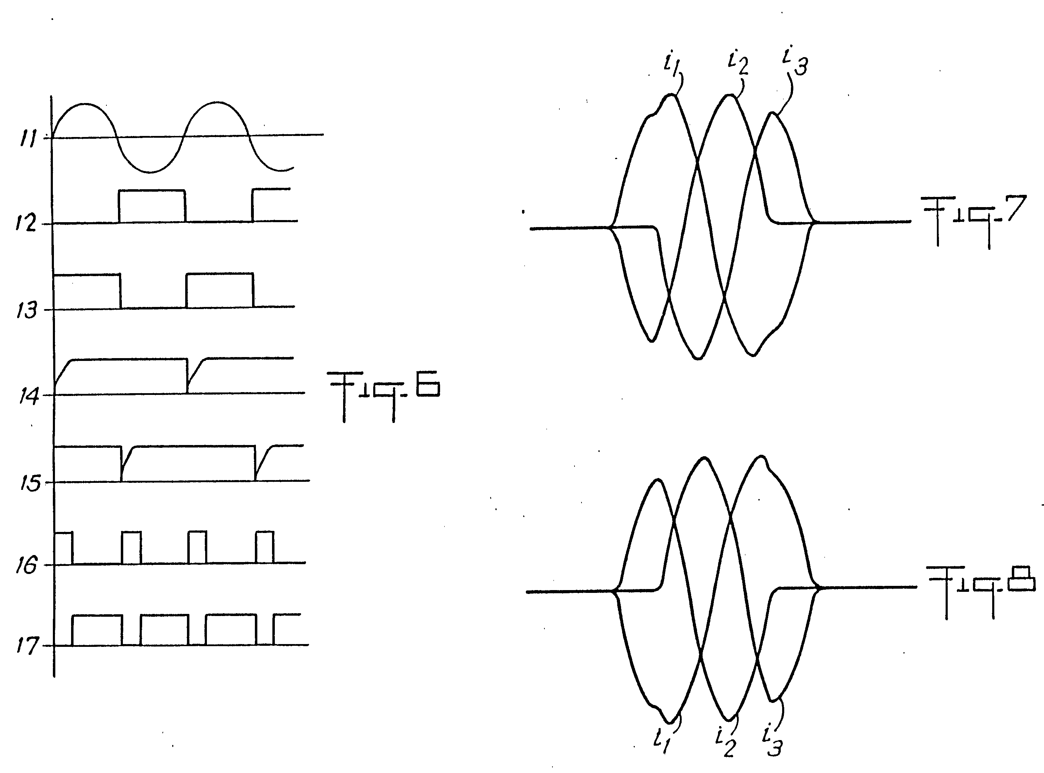

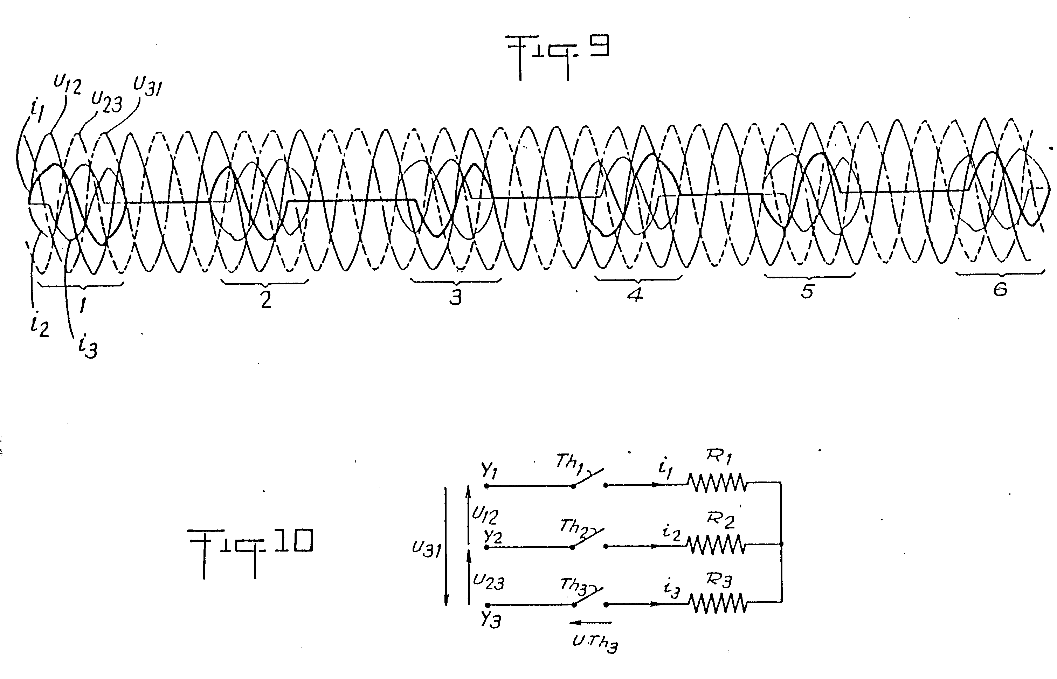

Avant de décrire un exemple détaillé de circuits en référence aux figures 2 à 5, on exposera en référence aux figures 7 à 10 le principe du déclenchement de trains d'ondes synchronisés de faible durée, avec rotation des déclenchements, afin d'éviter, sur un cycle de six trains d'ondes, l'apparition d'une composante continue ou d'un déséquilibre des phases.

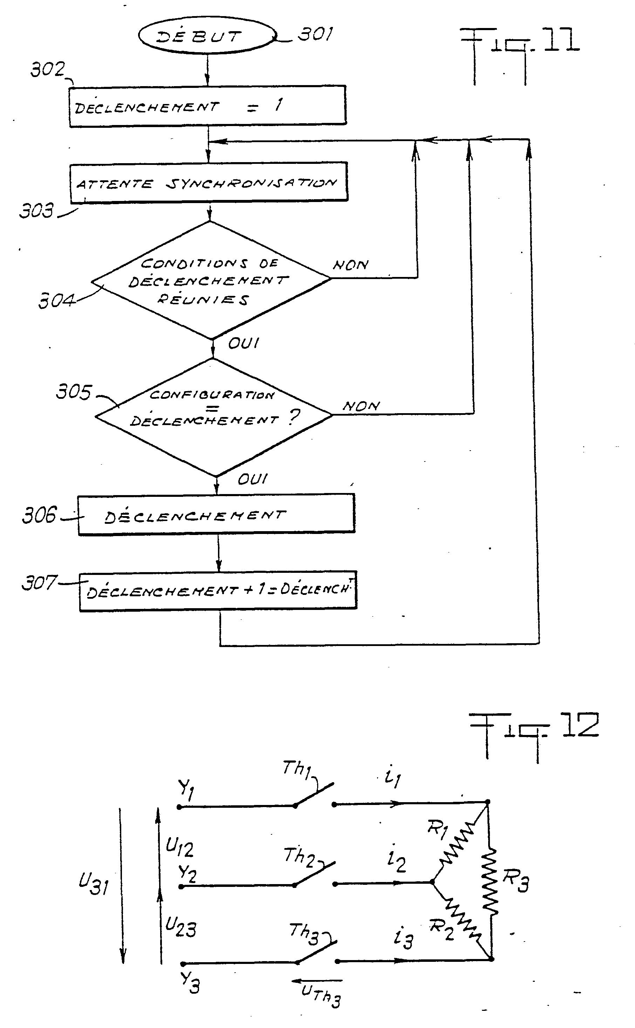

La figure 10 montre un ensemble de trois résistances $R_1$, $R_2$, $R_3$ montées en étoile et alimentées à partir d'un réseau triphasé. Des interrupteurs à thyristors $Th_1$ $Th_2$, $Th_3$ sont placés sur chacune des liges d'alimentation correspondant aux trois phases $Y_1$, $Y_2$, $Y_3$ en série avec les résistances $R_1$, $R_2$, $R_3$ respectivement, (puisqu'il s'agit d'un montage en étoile). Les courants parcourant les lignes d'alimentation et dans le cas d'un montage en étoile, les résistances $R_1$, $R_2$, $R_3$ sont désignés par $i_1$, $i_2$, $i_3$ respectivement. Les tensions composées $u_{12}$, $u_{23}$, $u_{31}$ correspondant respectivement à la tension composée de la phase $Y_1$ par rapport à la phase $Y_2$, à la tension de la phase $Y_2$ par rapport à la phase $Y_3$ et à la tension de la phase $Y_3$ par rapport à la phase $Y_1$ sont représentées par des flèches sur la figure 10.

La figure 9 montre l'évolution dans le temps des trois tensions composées $u_{12}$ (trait plein), $u_{23}$ (trait discontinu), $u_{31}$ (trait mixte) qui sont des sinusoïdes décalées de $2\pi/3$ les unes par rapport aux autres.

L'évolution dans le temps des courants $i_1$, $i_2$, $i_3$ dans les liges des phases $Y_1$, $Y_2$, $Y_3$ alimentant les résistances $R_1$, $R_2$, $R_3$, respectivement, est également représentée sur la figure 9 lorsque l'on réalise une commande conforme à l'invention. L'évolution du courant $i_1$ a été représentée en trait gras pour mieux faire ressortir la forme différente au cours des trains d'ondes successifs référencés 1 à 6 au cours d'un cycle.

Sur la figure 9, on a fixé une origine des temps $T_0 = 0$ lorsque la tension $u_{12}$ s'annule dans le sens montant. A cet instant, on amorce les thyristors des interrupteurs $Th_1$, $Th_2$, tandis que les thyristors de l'interrupteur $Th_3$ restent bloqués. Des courants $i_1$ et $i_2$ s'établissent alors dans les résistances $R_1$ et $R_2$, tandis que le courant $i_3$ dans la résistance $R_3$ reste nul. Lorsque la tension $u_{Th3}$ aux bornes de l'interrupteur $Th_3$ s'annule, c'est-à-dire avec un déphasage de 90° par rapport à l'instant d'amorçage des thyristors des interrupteurs $Th_1$ et $Th_2$ si les résistances $R_1$, $R_2$, $R_3$ sont égales entre elles, on amorce les thyristors de l'interrupteur $Th_3$. A partir de ce moment, les courants $i_1$, $i_2$, $i_3$ sont triphasés.

Sur la figure 9, on a représenté des trains d'onde monocycles avec une commande à 50 %. En d'autres termes, il existe un déclenchement syncopé, de sorte que chaque interrupteur à thyristors ne conduit que pendant une période et se trouve non conducteur pendant une période sur deux.

Dans ce cas, on laisse les thyristors des interrupteurs $Th_1$, $Th_2$, $Th_3$ s'éteindre au premier passage à zéro après deux alternances pleines. Pour le train d'onde 1, c'est le courant $i_2$ qui repasse le premier à zéro en descendant, tandis que les courants $i_1$ et $i_3$ s'annulent à un instant ultérieur correspondant à un

4

retard de π/2 par rapport à l'annulation du courant $i_2$. Les impulsions de gâchette des thyristors des interrupteurs $Th_2$, $Th_1$ et $Th_3$ sont donc interrompues de telle manière que les courants $i_2$ puis $i_1$ et $i_3$ du train d'onde 1 s'interrompent à leur passage à zéro, tel que représenté sur la figure 9.

Si l'on considère le seul train d'onde 1 avec un déclenchement syncopé à 50 % dans lequel sur chaque phase il y a conduction une période sur deux, on constate que, par suite de dissymétries des alternances positives et négatives des courants $i_2$ et $i_3$ il apparait une composante continue dans les résistances correspondantes et les puissances dissipées dans les résistances $R_1$, $R_2$, $R_3$ sont elles-mêmes différentes.

Afin de remédier à cet inconvénient, selon l'invention, le démarrage des trains d'onde successifs n'a pas lieu systématiquement dans les mêmes conditions (tel que le passage à zéro de la tension $u_{12}$ de la phase 1 par rapport à la phase 2 dans le sens montant adopté comme point de départ pour le premier train d'onde 1 de la figure 9).

Au contraire, pour chaque nouveau train d'onde, on démarre sur le premier passage à zéro d'une tension composée $u_{31}$, $u_{23}$, $u_{12}$ suivant celui $u_{12}$, $u_{31}$, $u_{23}$ sur lequel on a démarré précédemment. En procédant de la sorte par permutation, on définit un cycle de six trains d'onde 1 à 6 démarrant chacun sur un passage à zéro de type différent, ce qui, pour un cycle complet de six trains d'onde, conduit à un rééquilibrage de la puissance dissipée dans les trois charges $R_1$, $R_2$, $R_3$ et à l'annulation des composantes continues introduites initialement par le mode déclenchement syncopé synchronisé.

Comme représenté sur la figure 9, la rotation de déclenchements correspond au cycle suivant :

| N° du déclenchement | Interrupteurs fermés les premiers | Passage à zéro provoquant la fermeture des premiers interrupteurs | Interrupteur fermé avec un retard de 90° |
|---|---|---|---|
| 1 | $Th_1$ et $Th_2$ | $u_{12}$ .........↗ | $Th_3$ |
| 2 | $Th_1$ et $Th_3$ | $u_{31}$ .........↘ | $Th_2$ |
| 3 | $Th_2$ et $Th_3$ | $u_{23}$ .........↗ | $Th_1$ |
| 4 | $Th_1$ et $Th_2$ | $u_{12}$ .........↘ | $Th_3$ |
| 5 | $Th_3$ et $Th_1$ | $u_{31}$ .........↗ | $Th_2$ |
| 6 | $Th_2$ et $Th_3$ | $u_{23}$ .........↘ | $Th_1$ |

Sur le tableau ci-dessus, une flèche dirigée vers le haut indique que la tension composée considérée passe à zéro en évoluant dans le sens croissant tandis qu'une flèche dirigée vers le bas indique que la tension composée considérée passe à zéro en évoluant dans le sens décroissant.

Les figures 7 et 8 représentent, de façon agrandie, les trains d'onde correspondant aux déclenchements 1 et 4 respectivement.

La figure 11 représente un organigramme simplifié du fonctionnement du microprocesseur 100 en fonction des informations fournies par les circuits 106 et 107 de la figure 1 pour fournir des signaux de commande de gâchette correspondant, tour à tour, aux types de déclenchement désignés ci-dessus par les numéros 1 à 6.

Après le début d'un cycle (étape 301), le déclenchement est fixé au mode n° 1 (étape 302), puis le système est mis en attente de signaux de synchronisation fournis sous forme d'interruptions par le circuit 107 (étape 303). A chaque apparition d'un signal de synchronisation, un test est effectué pour déterminer si les conditions de déclenchement sont réunies (étape 304). Si ce n'est pas le cas, il y a retour à l'étape 303. Si les conditions de déclenchement sont réunies, il y a un test pour déterminer si le système est configuré de manière à provoquer un déclenchement (étape 305). Si ce n'est pas le cas, il y a retour à l'étape d'attente de synchronisation. Si c'est le cas, il y a passage à l'étape 306 de déclenchement, puis incrémentation du numéro d'ordre du mode de déclenchement (étape 307) et retour à l'étape 303 d'attente de synchronisation. On notera qu'en outre il est possible d'ajouter un algorithme spécial permettant la discrimination et le rejet des faux zéros dus à des parasites électromagnétiques pouvant perturber le fonctionnement.

La figure 2 représente, pour une phase $Y_1$, la partie aval de la chaîne de traitement 110 à 114 de la figure 1 qui permet d'assurer le déclenchement des thyristors 131, 132 d'un interrupteur à thyristors $Th_1$ et l'alimentation de charges 157 à partir d'une ligne de puissance 158 lors de la fermeture de l'interrupteur $Th_1$. Les circuits de la figure 2 correspondent ainsi aux sous-ensembles 112 à 114 de la chaîne de traitement de la figure 1.

L'interrupteur $Th_1$ comprend deux thyristors 131, 132 montés tête-bêche en anti-parallèle et pouvant assurer chacun la conduction pendant une alternance à partir de la ligne d'alimentation 158, afin de faire circuler un courant dans la charge résistive 157. Les interrupteurs $Th_1$, $Th_2$, $Th_3$ (fig. 10) sont insérés dans chacune des trois lignes d'alimentation telles que la ligne 158. Sur chaque ligne 158, on interpose également un fusible 159 monté en parallèle avec un témoin de fusible 156 constitué par un voyant (fig. 2).

Le signal de commande de la gâchette $G_1$ du premier thyristor 131 est appliqué sur la base d'un transistor 122 dont la sortie collecteur ouvert fort courant assure le transfert des impulsions fournies sur la borne de commande $CG_1$ vers le transformateur d'impulsions 127 par l'intermédiaire d'un circuit comportant un condensateur 126 en parallèle sur des résistances 125. Une résistance de polarisation 121 relie la base du transistor 122 à une borne d'alimentation en tension continue et le collecteur du transistor 122 est également relié à la borne d'alimentation positive par l'intermédiaire d'une diode 123 et d'une diode Zener 124 montées tête-bêche.

Le transformateur d'impulsions 127 assure l'isolement, l'amplification et l'adaptation d'impédance des impulsions envoyées à travers le transistor 122. Le secondaire du transformateur 127 est relié, de façon classique, par une diode 128, à la gâchette du thyristor 131 et le circuit parallèle, constitué par un condensateur 129 et une résistance 130, est connecté entre la cathode de la diode 128 et l'extrémité de l'enroulement secondaire du transformateur 127 relié à la ligne 159.

Les éléments 141 à 150 correspondent, respectivement, aux éléments 121 à 130 et servent à transmettre des impulsions sur la gâchette $G_2$ du thyristor 132.

Sur le schéma de la figure 2, on peut encore voir, de façon classique, en parallèle sur les espaces anode-cathode des thyristors 131, 132, une réactance ajustable 133 et le montage série d'une résistance 135 et d'un condensateur 134.

Un transformateur d'intensité 151, associé à une résistance 152, permet de prélever sur la ligne 158 un signal représentant du courant i parcourant la charge 157. Par ailleurs, un transformateur 153 dont le primaire est en série avec des résistances 154, 155 et est relié à la ligne 158, correspond au transformateur 105 de la figure 1 et permet de fournir un signal représentatif de la tension composite correspondant à la ligne 158.

La figure 3 montre les circuits de la chaîne de traitement 110 à 114 qui correspondent aux étages 110 et 111 et sont interposés entre les sorties de commande de gâchette du microprocesseur 100 et les bornes de commande de gâchette du circuit 190 auquel sont reliés des circuits tels que ceux représentés sur la figure 2.

Pour chacune des trois phases, les impulsions de déclenchement à appliquer aux gâchettes des thyristors des interrupteurs électroniques $Th_1$, $Th_2$, $Th_3$ sont générées par un circuit oscillateur astable, par exemple à une fréquence de l'ordre de 20 kHz. Chaque circuit astable comprend un circuit intégré 160 ; 170 ; 180 associé à des résistances 161, 162 ; 171, 172 ; 181, 182 et à des condensateurs 163, 164 ; 173, 174 ; 183, 184. Le démarrage de chaque circuit astable est synchronisé sur les commandes de gâchette de la phase correspondante par l'intermédiaire d'une porte OU 165 ; 175 ; 185.

Des portes ET 166, 167 ; 176, 177 ; 186, 187 dont une entrée est reliée à la sortie d'inhibition INH du microprocesseur 100 et/ou à une entrée externe d'inhibition, une autre entrée est reliée à la sortie du circuit 160 ; 170 ; 180 de l'un des circuits astables et une troisième entrée est reliée à une sortie de commande de gâchette $CG_1$ $CG_2$ du microprocesseur 100, permettent d'inhiber le déclenchement des thyristors, notamment en cas de défaut, tel que l'absence d'une phase, en cas de chute de tension du réseau, ou encore par le circuit de chien de garde 104 de la figure 1 pendant la période d'attente de réinitialisation.

Les sorties des portes ET 166, 167, 176, 177, 186, 187 sont reliées par l'intermédiaire d'amplificateurs 191 à 196 au circuit 190 délivrant des signaux de commande aux circuits d'interface 112 (fig. 1).

La figure 4 montre un circuit classique, dit de chien de garde, qui comprend un circuit oscillateur astable formé autour d'un circuit intégré 201 et comprenant de résistances 204, 205 et des condensateurs 206, 207 de façon analogue aux circuits astables de la fig. 3, et deux circuits monostables comportant chacun un circuit intégré 208 ; 213, une résistance 209 ; 214 et un condensateur 210 ; 215 et associés à une résistance 211 et un condensateur 212 communs. Les deux circuits monostables sont réarmés de façon indépendante en des points différents du programme de commande du microprocesseur 100 à partir de sorties PAØ-WDI et PAI-WDØ du microprocesseur 100, reliées, en outre, à la tension d'alimentation du montage par des résistances 222, 223.

Les sorties des circuits intégrés 208, 213 des deux circuits monostables sont reliés aux entrées d'une porte OU 216 dont la sortie est reliée à l'entrée d'une porte NON ET203 dont l'autre entrée est reliée par un circuit inverseur 202 à la sortie du circuit intégré 201 du circuit astable. La sortie de la porte NON ET 203 est reliée à l'entrée RESET de réinitialisation du microprocesseur 100.

La sortie INH d'inhibition du microprocesseur 100 est reliée par une résistance 224 à l'entrée d'une porte NON ET 218. Une diode Zener 220 et une résistance 221 sont, en outre, connectées entre ladite entrée de la porte NON ET 218 et la masse. L'autre entrée de la porte NON ET 218 est reliée, par un circuit inverseur 217, à la sortie de la porte OU 216. La sortie de la porte NON ET 218 est reliée, par un circuit inverseur 219, à une entrée PD7-INH d'inhibition du microprocesseur 100.

Avec un tel circuit de chien de garde, la retombée de l'un des deux circuits monostables entraîne, automatiquement, la réinitialisation du microprocesseur 100. Tant que celui-ci n'est pas effectué, le déclenchement des thyristors est inhibé.

Le circuit de chien de garde assure le déclenchement de la réinitialisation du microprocesseur 100 lors de la mise sous tension, en cas de défaillance du microprocesseur et après une chute de tension du secteur dès que la tension est redevenue normale.

Comme on l'a vu en référence aux figures 1 et 2, pour chaque phase, il y a prélèvement à l'aide d'un transformateur d'un signal représentatif de la tension composée correspondant à cette phase par rapport à une autre phase prédéterminée. La figure 5 représente un exemple de circuit de mise en forme de ces signaux alternatifs pour déterminer les passages par zéro et le sens de variation.

Pour la première phase $Y_1$ le signal prélevé à l'aide d'un transformateur est appliqué au point 11 de la figure 5 et correspond à une sinusoïde (premier signal de la fig. 6). Le point 11 est relié à la tension d'alimentation par une résistance 231, à la masse par une résistance 232 et à l'entrée inverseuse d'un amplificateur opérationnel 234 par une résistance 233. Un condensateur 235 est connecté entre l'entrée inverseuse et la sortie de l'amplificateur opérationnel 234, elle-même reliée par une résistance 236 en un point 12 relié à la cathode d'une diode Zener 237 et sur lequel peut être prélevé le signal rectangulaire 12 de la figure 6 qui présente une impulsion pour chaque alternance négative du signal sinusoïdal d'entrée 11 et fournit ainsi une information SGN $Y_1$ concernant le signe de la base $Y_1$.

Pour les deux autres phases $Y_2$ et $Y_3$ des composants 251 à 257 et 271 à 277 sont montés de façon tout-à-fait identique aux composants 231 à 237 et permettent de délivrer des signaux SGN $Y_2$ et SGN $Y_3$ semblables au signal présent au point 12.

Le point 12 de la figure 5 est relié par un circuit inverseur 238 au point 13 sur lequel apparaît un signal rectangulaire inversé par rapport au signal 12 (fig. 6). Le point 13 est relié par un condensateur 240 à une entrée 15 d'une porte NON ET 243, laquelle entrée 15 est reliée à l'alimentation par une résistance 242 et présente une impulsion à chaque front descendant des créneaux du point 13 (fig. 6). Le point 12 est, en outre, relié par un condensateur 239 à une entrée 14 de la porte NON ET 243, laquelle entrée et reliée à l'alimentation par une résistance 241 et présente une impulsion à chaque front descendant des créneaux du point 12. La sortie 16 de la porte NON ET 243 fournit des impulsions à chaque passage à zéro du signal alternatif présent au point 11 et une porte inverseuse 244 permet de fournir au point 17 de sortie relié à l'alimentation par une résistance 245 des interruptions pour chaque passage à zéro du signal alternatif présent au point 11.

Pour les phases $Y_2$ et $Y_3$, les composants 258 et 264 et 278 à 284 sont semblables aux composants 238 à 244 et les sorties des portes inverseuses 264 et 284 sont également reliées au point 17 qui fournit au microprocesseur 100 les signaux d'interruption $\overline{INT}$ à chaque passage à zéro de la tension composée $u_{12}$, $u_{23}$ ou $u_{31}$ correspondant à l'une des phases quelconques de la tension d'alimentation triphasée.

Naturellement, les circuits décrits ci-dessus en référence aux figures 2 à 5 ne sont donnés qu'à titre d'exemple non limitatif et peuvent faire l'objet de modifications ou d'adjonctions. Par ailleurs, si dans la description on a considéré le cas de charges montées en étoile, l'invention s'applique également de la même manière à des charges montées en triangle, comme représenté sur la figure 12.

La figure 12 représente de façon symbolique l'alimentation à partir d'un réseau triphasé de charges $R_1$, $R_2$, $R_3$ montées en triangle, avec des interrupteurs à thyristors $Th_1$, $Th_2$, $Th_3$ disposés dans chaque ligne d'alimentation correspondant à une phase $Y_1$, $Y_2$, $Y_3$, comme dans le cas du montage de la figure 10. L'invention s'applique de la même manière que dans le cas du montage en étoile sans neutre de la figure 10, si l'on considère sur la figure 12 les courants $i_1$, $i_2$, $i_3$ parcourant chaque ligne d'alimentation $Y_1$, $Y_2$, $Y_3$ et les tensions composées entre phases à savoir la tension $u_{12}$ entre la phase $Y_1$ et la phase $Y_2$, la tension $u_{23}$ entre la phase $Y_2$ et la phase $Y_3$ et la tension $u_{31}$ entre la phase $Y_3$ et la phase $Y_1$. La tension $u_{Th3}$ désigne la tension aux bornes de l'interrupteur $Th_3$.

Dans le cas du montage de la figure 10 comme dans celui de la figure 12, si l'on considère que les charges $R_1$, $R_2$, $R_3$ présentent des impédances égales entre elles, la fermeture du troisième interrupteur, par exemple $Th_3$, qui intervient lorsque la tension $u_{Th3}$ à ses bornes s'annule, c'est-à-dire toujours avec un certains retard par rapport à la fermeture des deux premiers interrupteurs ($Th_1$ et $Th_2$ dans le cas considéré), s'effectue avec un décalage de $\pi/2$ par rapport à la fermeture des deux premiers interrupteurs. Ceci correspond au cas du déclenchement n° 1 ou du déclenchement n° 4 de la figure 9. Si les charges $R_1$, $R_2$, $R_3$ sont déséquilibrées, le retard à la fermeture du troisième interrupteur sera différent de $\pi/2$ mais sera toujours constant quelle que soit la configuration du déclenchement.

**Revendications**

1. Procédé de commande de l'alimentation de charges à partir d'une source d'alimentation triphasée, selon lequel à chaque déclenchement de l'alimentation des charges on n'autorise le passage de courant dans chaque charge que pendant une durée correspondant à un certain nombre de périodes du courant alternatif d'alimentation définissant un train d'onde et à chaque déclenchement de l'alimentation des charges on autorise d'abord, de façon synchronisée lors du passage à zéro de la tension entre deux phases, le passage de courant dans deux lignes d'alimentation des charges correspondant à deux phases différentes du courant triphasé d'alimentation puis, avec un retard prédéterminé, le passage de courant dans la troisième ligne d'alimentation des charges correspondant à la troisième phase, caractérisé en ce que pour chaque déclenchement de l'alimentation des charges ($R_1$, $R_2$, $R_3$) on sélectionne une tension déterminée entre deux phases ($u_{12}$ ou $u_{23}$ ou $u_{31}$) et un sens d'évolution déterminé, croissant ou décroissant, de cette tension pour autoriser, tout d'abord, un passage de courant dans deux lignes déterminées ($Y_1$ et $Y_2$ ou $Y_2$ et $Y_3$ ou $Y_3$ et $Y_1$) d'alimentation des charges lors du passage par zéro de ladite tension déterminée ($u_{12}$ ou $u_{23}$ ou $u_{31}$) dans ledit sens d'évolution déterminé, et en ce que pour une série de six déclenchements successifs de l'alimentation des charges, on réalise des permutations parmi les phases considérées et les sens d'évolution considérés pour définir ladite tension déterminée ($u_{12}$ ou $u_{23}$ ou $u_{31}$) et le sens d'évolution pris en compte pour cette tension, afin de provoquer chaque déclenchement lors d'un passage à zéro correspondant à une combinaison différente d'une tension déterminée entre phases et d'un sens d'évolution de cette tension ($u_{12}$ croissante, $u_{31}$ décroissante, $u_{23}$ croissante, $u_{12}$ décroissante, $u_{31}$ croissante, $u_{23}$ décroissante), de sorte que pour les courants ($i_1$, $i_2$, $i_3$) parcourant chaque ligne ($Y_1$, $Y_2$, $Y_3$) d'alimentation des charges ($R_1$, $R_2$, $R_3$) sur un cycle de six déclenchements conduisant à la formation de six trains d'onde, la composante continue est annulée.

2. Procédé selon la revendication 1, caractérisé en ce que l'on réalise des déclenchements « syncopés » de l'alimentation des charges et on interrompt l'alimentation des charges au premier passage à zéro après deux alternances pleines de conduction.

3. Procédé selon la revendication 1 ou 2, caractérisé en ce que chaque déclenchement de l'alimentation des charges est réalisé lors d'un passage à zéro de la tension déterminée entre phases dont la valeur s'est annulée immédiatement après le passage à zéro de la tension déterminée entre phases ayant provoqué le déclenchement précédent de l'alimentation des charges.

4. Dispositif de commande de l'alimentation de charges à partir d'une source d'alimentation triphasée, pour la mise en œuvre du procédé selon l'une quelconque des revendications 1 à 3, comprenant un interrupteur à thyristors ($Th_1$, $Th_2$, $Th_3$) placé sur chaque ligne d'alimentation d'une charge ($R_1$, $R_2$, $R_3$) correspondant à une phase ($Y_1$, $Y_2$, $Y_3$) et un circuit de commande des interrupteurs à thyristors pour fermer d'abord, de façon synchronisée par rapport au passage par zéro d'une tension composée entre deux phases (par exemple $u_{12}$) les deux interrupteurs ($Th_1$, $Th_2$) placés sur les lignes correspondant à ces deux phases, puis fermer le troisième interrupteur ($Th_3$) lors de l'annulation de la tension ($uTh_3$) aux bornes de ce troisième interrupteur, et maintenir les interrupteurs fermés pendant une durée prédéterminée correspondant à un nombre prédéterminé de périodes du courant alternatif d'alimentation, et caractérisé en ce qu'il comprend un microprocesseur (100), des circuits (105 à 107) de détection du passage à zéro de la tension composée de chaque phase par rapport à une autre phase ($u_{12}$, $u_{23}$ $u_{31}$) et de détection du signe de chaque tension composée ($u_{12}$, $u_{23}$, $u_{31}$) et des circuits indépendants (110 à 114) de commande des gâchettes des thyristors (131, 132) des interrupteurs à thyristors ($Th_1$, $Th_2$, $Th_3$) placés sur les lignes d'alimentation des charges ($R_1$, $R_2$, $R_3$) et en ce que les circuits (105 à 107) de détection du passage à zéro de la tension composée de chaque phase ($u_{12}$, $u_{23}$, $u_{31}$) sont reliés au microprocesseur (100) pour engendrer des interruptions et déclencher la commande des circuits indépendants (110 à 114) de commande des gâchettes des thyristors des interrupteurs à thyristors ($Th_1$, $Th_2$, $Th_3$) selon un ordre prédéterminé.

5. Dispositif selon la revendication 4, caractérisé en ce que les circuits (105 à 107) de détection du passage à zéro de la tension composée de chaque phase ($u_{12}$, $u_{23}$, $u_{31}$) et de détection du signe de la tension composée de chaque phase ($u_{12}$, $u_{23}$, $u_{31}$) comprennent pour chaque phase ($Y_1$, $Y_2$, $Y_3$), un transformateur (105) et des circuits de mise en forme (106, 107).

6. Dispositif selon la revendication 4 ou 5, caractérisé en ce que les circuits indépendants (110 à 114) de commande des gâchettes des thyristors (131, 132) des interrupteurs à thyristors ($Th_1$, $Th_2$, $Th_3$) comprennent pour chacune des trois phases ($Y_1$, $Y_2$, $Y_3$) un circuit oscillateur (110) constitué par un circuit astable dont le démarrage est synchronisé sur la commande de gâchette correspondante du microprocesseur (100) un circuit d'interface (112) et un transformateur d'impulsions (113) assurant l'isolement, l'amplification et l'adaptation d'impédance des impulsions envoyées.

7. Dispositif selon la revendication 6, caractérisé en ce que les circuits indépendants (110 à 114) de commande des gâchettes des thyristors (131, 132) comprennent, en outre, un circuit (111) d'inhibition de déclenchement.

8. Dispositif selon l'une quelconque des revendications 4 à 7, caractérisé en ce qu'il comprend, en outre, un circuit (104), dit « chien de garde », associé au microprocesseur (100), qui comprend au moins deux circuits monostables (208, 213) destinés à être réarmés indépendamment en des points différents du programme.

# EP 0 226 520 B1

## Claims

1. Process for controlling the supply of loads from a three-phase supply source, according to which at each trip of the supply of the loads the flow of current in each load is only permitted during a time corresponding to a certain number of periods of the alternating supply current defining a wave train, and on each trip of the supply of the loads current is first of all permitted to flow, during the passage to zero of the voltage between two phases, in two lines for supplying loads corresponding to two different phases of the three-phase supply current and then, with a predetermined delay, current is permitted to flow in the third supply line of the loads corresponding to the third phase, characterised in that for each trip of the supply of the loads ($R_1$, $R_2$, $R_3$) a specific voltage between two phases ($u_{12}$ or $u_{23}$ or $u_{31}$) and a specific direction of development, increasing or decreasing, of this voltage are selected in order first of all to permit current to flow in two specific lines $Y_1$ and $Y_2$ or $Y_2$ and $Y_3$ or $Y_3$ and $Y_1$) for supplying the loads during the passage through zero of the said determined voltage ($u_{12}$ or $u_{23}$ or $u_{31}$) in the said determined direction of development, and that for a series of six successive trips of the supply of the loads permutations among the phases and directions of development under consideration are made in order to define the said determined voltage ($u_{12}$ or $u_{23}$ or $u_{31}$) and the direction of development taken into account for this voltage in order to cause each trip during a passage to zero corresponding to a different combination of a voltage determined between phases and a direction of development of this voltage ($u_{12}$ increasing, $u_{31}$ decreasing, $u_{23}$ increasing, $u_{12}$ decreasing, $u_{31}$ increasing, $u_{23}$ decreasing), in such a way that for the currents ($i_1$, $i_2$, $i_3$) flowing through each line ($Y_1$, $Y_2$, $Y_3$) for supplying the loads ($R_1$, $R_2$, $R_3$) on a cycle of six trips loading to the formation of six wave trains, the continuous component is cancelled.

2. Process as claimed in claim 1, characterised in that « syncopated » trips of the supply of the loads are mode and the supply of the loads is interrupted at the first passage to zero after two full alternations of conduction.

3. Process as claimed in claims 1 or 2, characterised in that each trip of the supply of the loads is made during a passage to zero of the voltage determined between phases, the value of which is cancelled immediately after the passage to zero of the voltage determined between phases which caused the preceding trip of the supply of the loads.

4. Device for controlling the supply of loads from a three-phase supply source for carrying out the process according to any one claims 1 to 3, including an interrupter with thyristors ($Th_1$, $Th_2$, $Th_3$) placed on each line for supplying a load ($R_1$, $R_2$, $R_3$) corresponding to a phase ($Y_1$, $Y_2$, $Y_3$) and a circuit for controlling the interrupters with thyristors in order first of all, in a manner which is synchronised with respect to the passage through zero of a compound voltage between two phases (for example $u_{12}$), to close the two interrupters ($Th_1$, $Th_2$) placed on the lines corresponding to these two phases, then to close the third interrupter ($Th_3$) at the time of the cancellation of the voltage ($uTh_3$) on the terminals of this third interrupter, and to keep the interrupters close during a predetermined time corresponding to a predetermined number of periods of the alternating supply current, and characterised in that it includes a microprocessor (100), circuits (105 to 107) for detecting the passage to zero of the compound voltage of each phase with respect to another phase ($u_{12}$, $u_{23}$, $u_{31}$) and for detecting the sign of each compound voltage ($u_{12}$, $u_{23}$, $u_{31}$) and of the independent circuits (110 to 114) control of the gates of the thyristors (131, 132) of the interrupters with thyristors ($Th_1$, $Th_2$, $Th_3$) placed on the lines for supplying the loads ($R_1$, $R_2$, $R_3$) and that the circuits (105 to 107) for detecting the passage to zero of the compound voltage of each phase ($u_{12}$, $u_{23}$, $u_{31}$) are connected to the microprocessor (100) in order to generate interruptions and trip the control of the independent circuits (110 to 114) for controlling the gates of the thyristors of the interrupters with thyristors ($Th_1$, $Th_2$, $Th_3$) according to a predetermined order.

5. Device as claimed in claim 4, characterised in that the circuits (105 to 107) for detecting the passage to zero of the compound voltage of each phase ($u_{12}$, $u_{23}$, $u_{31}$) and for detecting the sign of the compound voltage of each phase ($u_{12}$, $u_{23}$, $u_{31}$) comprise, for each ($Y_1$, $Y_2$, $Y_3$), a transformer (105) and forming circuits (106, 107).

6. Device as claimed in claims 4 or 5, characterised in that the independent circuits (110 to 114) for controlling the gates of the thyristors (131, 132) of the interrupters with thyristors ($Th_1$, $Th_2$, $Th_3$) comprise for each of the three phases ($Y_1$, $Y_2$, $Y_3$) an oscillator circuit (110) consisting of an astable circuit in which the starting is synchronised with the control of the corresponding gate of the microprocessor (100), an interface circuit (112) and a pulse transformer (113) ensuring the isolation, amplification and adaptation of impedance of the pulses sent.

7. Device as claimed in claim 6, characterised in that the independent circuits (110 to 114) for controlling the gates of the thyristors (131, 132) also comprise a circuit (111) to inhibit tripping.

8. Device as claimed in any one of claims 4 to 7, characterised in that it also comprises a circuit (104), known as a « watchdog », associated with the microprocessor (100) and comprising at least two monostable circuits (208, 213) intended to be rearmed independently at different points in the programme.

9

**Patentansprüche**

1. Verfahren zur Laststromversorgungsteuerung aus einer Dreiphasenversorgungsquelle, gemäß dem bei jeder Auslösung der Versorgung der Lasten das Durchtreten von Strom in jeder Last lediglich während einer einen Wellenzug festlegenden bestimmten Periodenzahl des Versorgungswechselstroms gestattet wird und bei jeder Auslösung der Versorgung der Lasten zunächst beim Nulldurchgang der Spannung zwischen zwei Phasen auf synchronisierte Weise das Durchtreten von Strom in zwei zwei verschiedenen Phasen des Dreiphasenversorgungsstroms entsprechenden Versorgungsleitungen der Lasten, dann mit einer vorbestimmten Verzögerung das Durchtreten von Strom in der dritten Versorgungsleitung der Lasten entsprechend der dritten Phase gestattet wird, dadurch gekennzeichnet, daß für jede Auslösung der Versorgung der Lasten ($R_1$, $R_2$, $R_3$) eine bestimmte Spannung zwischen zwei Phasen ($u_{12}$ oder $u_{23}$ oder $u_{31}$) und eine bestimmte Entwicklungsrichtung, zunehmend oder abnehmend, dieser Spannung ausgewählt wird, um zunächst ein Durchtreten von Strom in zwei bestimmten Leitungen ($Y_1$ und $Y_2$ oder $Y_2$ und $Y_3$ oder $Y_3$ und $Y_1$) zur Versorgung der Lasten beim Nulldurchgang der bestimmten Spannung ($u_{12}$ oder $u_{23}$ oder $u_{31}$) in der bestimmten Entwicklungsrichtung zu gestatten, und daß für eine Abfolge von sechs aufeinanderfolgenden Auslösungen der Versorgung der Lasten Permutationen unter den betrachteten Phasen und den betrachteten Entwicklungsrichtungen ausgeführt werden, um die bestimmte Spannung ($u_{12}$ oder $u_{23}$ oder $u_{31}$) und die für diese Spannung berücksichtigte Entwicklungsrichtung festzulegen, um jede Auslösung bei einem Nulldurchgang entsprechend einer unterschiedlichen Kombination einer bestimmten Spannung zwischen Phasen und einer Entwicklungsrichtung dieser Spannung ($u_{12}$ zunehmen, $u_{31}$ abnehmen, $u_{23}$ zunehmen, $u_{12}$ abnehmen, $u_{31}$ zunehmen, $u_{23}$ abnehmen) herbeizuführen derart, daß der Gleichstromteil zum Verschwinden gebracht ist, wobei die Ströme ($i_1$ $i_2$, $i_3$) jede Leitung ($Y_1$, $Y_2$, $Y_3$) zur Versorgung der Lasten ($R_1$, $R_2$, $R_3$) über einen Zyklus von zur Bildung von sechs Wellenzügen führenden sechs Auslösungen durchlaufen.

2. Verfahren nach Anspruch 1, dadurch gekennzeichnet, daß « Synkopen »-Auslösungen der Versorgung der Lasten ausgeführt werden und die Versorgung der Lasten beim ersten Nulldurchgang nach zwei vollen Leitungshalbperioden unterbrochen wird.

3. Verfahren nach Anspruch 1 oder 2, dadurch gekennzeichnet, daß jede Auslösung der Versorgung der Lasten bei einem Nulldurchgang der bestimmten Spannung zwischen Phasen ausgeführt wird, deren Wert unmittelbar nach dem Nulldurchgang der bestimmten Spannung zwischen Phasen verschwunden ist, die die vorhergehende Auslösung der Versorgung der Lasten herbeigeführt haben.

4. Vorrichtung zur Steuerung der Versorgung von Lasten aus einer Dreiphasenversorgungsquelle, zur Durchführung des Verfahrens nach einem beliebigen der Ansprüche 1 bis 3, aufweisend einen Thyristorschalter ($Th_1$, $Th_2$, $Th_3$), der auf jeder Versorgungsleitung einer Last ($R_1$, $R_2$, $R_3$) entsprechend einer Phase ($Y_1$, $Y_2$, $Y_3$) angeordnet ist, und einen Kreis zur Steuerung der Thyristorschalter, um zunächst auf synchronisierte Weise in bezug auf den Nulldurchgang einer zusammengesetzten Spannung zwischen zwei Phasen (beispielsweise $u_{12}$) die auf den diesen beiden Phasen entsprechenden Leitungen angeordneten beiden Schalter ($Th_1$, $Th_2$) zu schließen, dann bei Verschwinden der Spannung ($uTh_3$) an den Anschlüssen dieses dritten Schalters den dritten Schalter ($Th_3$) zu schließen und die geschlossenen Schalter während einer vorbestimmten Dauer entsprechend einer vorbestimmten Periodenzahl des Versorgungswechselstroms geschlossen zu halten, und dadurch gekennzeichnet, daß sie einen Mikroprozessor (100), Kreise (105 bis 107) zur Erfassung des Nulldurchgangs der zusammengesetzten Spannung jeder Phase in bezug auf eine andere Phase ($u_{12}$, $u_{23}$, $u_{31}$) und zur Erfassung des Vorzeichens jeder zusammengesetzten Spannung ($u_{12}$, $u_{23}$, $u_{31}$) und unabhängige Kreise (110 bis 114) zur Steuerung der Gates der Thyristoren (131, 132) der Thyristorschalter ($Th_1$, $Th_2$, $Th_3$) aufweist, die auf den Versorgungsleitungen der Lasten ($R_1$, $R_2$, $R_3$) angeordnet sind, und daß die Kreise (105 bis 107) zur Erfassung des Nulldurchgangs der zusammengesetzten Spannung jeder Phase ($u_{12}$, $u_{23}$, $u_{31}$) mit dem Mikroprozessor (100) verbunden sind, um Unterbrechungen zu erzeugen und die Steuerung der unabhängigen Kreise (110 bis 114) zur Steuerung der Gates der Thyristoren der Thyristorschalter ($Th_1$, $Th_2$, $Th_3$) gemäß einer vorbestimmten Reihenfolge auszulösen.

5. Vorrichtung nach Anspruch 4, dadurch gekennzeichnet, daß die Kreise (105 bis 107) zur Erfassung des Nulldurchgangs der zusammengesetzten Spannung jeder Phase ($u_{12}$, $u_{23}$, $u_{31}$) und zur Erfassung des Vorzeichens der zusammengesetzten Spannung jeder Phase ($u_{12}$, $u_{23}$, $u_{31}$) für jede Phase ($Y_1$, $Y_2$, $Y_3$) einen Transformator (105) und Kreise zur Formung (106, 107) aufweisen.

6. Vorrichtung nach Anspruch 4 oder 5, dadurch gekennzeichnet, daß die unabhängigen Kreise (110 bis 114) zur Steuerung der Gates der Thyristoren (131, 132) der Thyristorschalter ($Th_1$, $Th_2$, $Th_3$) für jede der drei Phasen ($Y_1$, $Y_2$, $Y_3$) einen Oszillatorkreis (110), gebildet durch einen astabilen Kreis, dessen Start auf die Steuerung des entsprechenden Gates des Mikroprozessors (100) synchronisiert ist, einen Interfacekreis (112) und einen Impulstransformator (113) aufweisen, die die Isolation, Verstärkung und Umpedanzanpassung der übermittelten Impulse sicherstellen.

7. Vorrichtung nach Anspruch 6, dadurch gekennzeichnet, daß die unabhängigen Kreise (110 bis 114) zur Steuerung der Gates des Thyristoren (131, 132) außerdem einen Kreis (111) zur Auslösungsverhinderung aufweisen.

8. Vorrichtung nach einem beliebigen der Ansprüche 4 bis 7, dadurch gekennzeichnet, daß sie außerdem einen sogenannten « Wachhund »-Kreis (104), dem Mikroprozessor (100) zugeordnet, aufweist, der wenigstens zwei monostabile Kreise (208, 213) aufweist, die dazu bestimmt sind, unabhängig an verschiedenen Punkten des Programms wieder eingeschaltet zu werden.

Fig. 1

Fig. 2

Fig. 3

Fig. 4

EP 0 226 520 B1

Fig-5

EP 0 226 520 B1

Fig.7

$i_3$ $i_2$ $i_1$

Fig.8

$i_3$ $i_2$ $i_1$

Fig.6

11 12 13 14 15 16 17

6

Fig.9

Fig.10

Fig. 11

DÉBUT — 301

302

DECLENCHEMENT = 1

ATTENTE SYNCHRONISATION

303

CONDITIONS DE DÉCLENCHEMENT RÉUNIES

304

NON

OUI

305

CONFIGURATION = DÉCLENCHEMENT ?

NON

OUI

306 — DÉCLENCHEMENT

307 — DÉCLENCHEMENT + 1 = DÉCLENCH^T

Fig. 12

$Y_1$   $Th_1$   $i_1$

$U_{12}$

$Y_2$   $Th_2$   $i_2$

$U_{31}$

$U_{23}$

$Y_3$   $Th_3$   $i_3$

$U_{Th_3}$

$R_1$

$R_3$

$R_2$